# FASCICULE DE BREVET EUROPEEN

(11) **EP 2 052 600 B1**
(45) Date de publication et mention de la délivrance du brevet: **22.09.2010**
(21) Numéro de dépôt: 08167042.4
(22) Date de dépôt: 20.10.2008
(51) Int. Cl.: A01K 13/00

(54) **Coque de protection flexible**
Flexible Schutzschale
Flexible protective shell

(30) Priorité: 23.10.2007 FR 0707424
(43) Date de publication de la demande: 29.04.2009
(73) Titulaire: Phoenix Innoplast, 64400 Oloron Sainte Marie (FR)
(72) Inventeur: Hodl, Manfred, 64400 Bidos (FR); Pinto-Marques, Georges, 64400 Bidos (FR)
(74) Mandataire: Chevalier, Renaud Philippe

(56) Documents cités:
- WO-A-95/00011
- US-A- 1 395 689
- US-A1- 2006 064 950
- US-A1- 2006 225 670
- US-A1- 2006 231 045
- US-B1- 6 526 920

## Description

La présente invention se rapporte à des moyens de protection d'une partie d'un membre d'un animal.

Il est connu depuis fort longtemps de chercher à protéger les membres d'un cheval afin d'éviter qu'il ne se blesse. De telles blessures peuvent découler de chocs se produisant par exemple lors du galop entre les membres avant et les sabots des membres arrière, ou encore lors de sauts d'obstacles.

Pour cela, il est actuellement proposé des guêtres ouvertes pour saut d'obstacle, destinées à la protection latérale et arrière du boulet et à la protection du tendon (partie arrière).

Il existe également des guêtres fermées en néoprène ou en cuir, chaque guêtre entourant le membre avec une coque rigide disposée uniquement en partie latérale intérieure pour la protection du boulet côté intérieur. Il s'agit d'une protection générale mais comportant des zones de moindre efficacité dans les zones où aucune coque n'est présente. La partie frontale du boulet et du canon ainsi que le tendon ne sont donc pas protégés.

Des bandes souples ou des protection intégrales en néoprène entourant le canon, le tendon et le boulet peuvent également être employées et assurent une protection contre le frottement entre les membres. Cependant, de telles protections sont clairement insuffisantes contre les chocs.

L'état de la technique peut également être illustré par l'enseignement du document US 1 395 689 A, qui décrit une botte pour cheval conçue pour couvrir et protéger non seulement le sabot et le paturon, mais également le boulet et la patte antérieure sous le genou. Cette botte comprend deux sections en cuir qui se chevauchent mutuellement au niveau de l'articulation de la jambe et qui sont reliées entre elles au moyen de deux rivets formant pivot. De telles bottes n'offrent que très peu de protection contre les chocs. En outre, lors du mouvement de la jambe autour de l'articulation, les deux sections glissent verticalement l'une par rapport à l'autre, provoquant ainsi un frottement des sections sur la jambe, et plus particulièrement sur le tibia.

Il est connu du document US 2006/231045 de prévoir une coque fermée de protection pour cheval comprenant une enveloppe externe réalisée dans un matériau rigide et une doublure interne réalisée dans un matériau élastomère ou flexible. La coque est associée à un chausson également réalisée avec une enveloppe externe rigide et une doublure interne en matériau élastomère ou flexible. Au niveau de l'articulation de la jambe, entre la coque et le chausson, rien n'est par contre prévu pour protéger la jambe et pour faciliter le mouvement de la jambe autour de cette articulation. En outre, la coque et le chausson ne peuvent pas se déformer, gênant de ce fait le mouvement de la jambe du cheval.

Le document US 2006/225670 A1 divulgue une botte pour cheval comprenant deux composants séparés, à savoir un chausson pour le sabot et une guêtre, raccordées l'un à l'autre sur l'arrière de la jambe au moyen d'une bande de cuir. La guêtre est essentiellement réalisée dans un matériau élastique et flexible afin de se serrer confortablement autour du paturon, sans offrir de protection contre les chocs. Bien qu'adaptée pour protéger le sabot du cheval, une telle botte n'offre aucune protection contre les chocs sur la jambe.

La présente invention a pour but de remédier en tout ou partie aux inconvénients cités précédemment, et consiste pour cela en une coque de protection destinée à être positionnée en partie avant d'un membre d'un animal afin de le protéger d'un choc frontal, ladite coque présentant une partie externe rigide ou semi-rigide comprenant au moins une zone à rigidité amoindrie permettant une déformation adaptée de ladite partie externe sous l'effet du mouvement naturel du membre de l'animal autour d'une articulation.

Ainsi, une telle coque permet la protection de la partie avant du membre, sans gêner notamment la flexion du boulet vers l'avant lors du mouvement du pied de l'animal. De ce fait, la coque assure une protection optimale de la zone frontale du boulet par l'intermédiaire de sa partie externe, sans toutefois emprisonner le boulet.

Il est bien entendu au sens de la présente demande que la zone à rigidité amoindrie de la partie externe de la coque constitue une zone faisant partie intégrante de ladite partie externe de la coque, c'est-à-dire venant de matière avec cette partie externe. Ainsi, la partie externe rigide ou semi-rigide constitue une pièce monobloc ou d'un seul tenant, réalisée préférentiellement par moulage d'une matière plastique, dans laquelle est ménagée ladite zone à rigidité amoindrie.

Dans une réalisation avantageuse, la zone à rigidité amoindrie est réalisée sous la forme d'une zone présentant une réduction de matière ou une réduction de l'épaisseur et ménagée dans la partie externe de la coque afin d'offrir une zone (ou ligne) de pliage adaptée pour permettre le mouvement naturel du membre de l'animal.

Une partie externe rigide correspond par exemple à une partie externe réalisée dans un matériau, avantageusement un matériau plastique, d'une dureté au moins égale à 90 shore A. Un tel matériau offre une très bonne protection contre chocs tout en permettant une réalisation, notamment par moulage, à coût réduit.

Une partie externe semi-rigide correspond par exemple à une partie externe réalisée dans un matériau, avantageusement un matériau plastique, d'une dureté comprise entre environ 70 et 90 shore A. Un tel matériau offre un très bon confort pour le membre de l'animal, en permettant une certaine latitude de déformation élastique de ladite partie externe, tout en offrant une bonne protection contre les chocs.

Une telle coque pourra alors être aussi bien réalisée sous la forme d'un élément de protection distinct pouvant coopérer avec une guêtre de protection traditionnelle ouverte, qu'être intégrée dans une guêtre de protection fermée.

Par conséquent, un avantage considérable de l'invention consiste dans le fait qu'un dispositif de protection faisant intervenir une guêtre de protection traditionnelle ouverte combinée à une coque selon l'invention permettra d'assurer une protection optimale dans toutes les disciplines d'équitation. En effet, la guêtre ouverte pourra toujours être utilisée de façon habituelle dans une discipline comme le saut d'obstacle par exemple, et la combinaison de cette guêtre avec une coque amovible selon l'invention confèrera une protection complète et adaptée notamment dans la discipline « Cross » où les obstacles sont rigides et figés, de sorte qu'ils constituent un danger pour la partie frontale du membre.

Selon une variante de réalisation préférée de l'invention, la partie externe se décompose en au moins une partie supérieure et une partie inférieure séparées l'une de l'autre par au moins une zone à rigidité amoindrie.

Préférentiellement, la zone à rigidité amoindrie est conçue de manière à constituer au moins un pont flexible entre la partie supérieure et la partie inférieure. Il doit être bien compris que cette zone à rigidité amoindrie peut être réalisée dans le même matériau que les parties supérieure et inférieure en choisissant un dimensionnement adéquat autorisant la déformation souhaitée, ou peut être ménagée dans un matériau moins rigide.

Avantageusement, au moins une tige de protection sensiblement longitudinale est ménagée dans la partie supérieure.

Avantageusement encore, au moins deux branches de protection divergentes sont ménagées dans la partie inférieure.

Préférentiellement, la zone de rigidité amoindrie constitue l'interface entre la tige de protection et les deux branches de protection.

Selon un mode préféré de réalisation de l'invention, la coque comprend des moyens de liaison conçus pour coopérer avec des moyens de liaison correspondants présentés par une guêtre de protection ouverte.

Avantageusement, les moyens de liaison comprennent au moins un passant pour sangle.

Avantageusement encore, la coque comprend une partie interne présentant un revêtement souple.

La présente invention se rapporte également à un dispositif de protection d'au moins une partie d'un membre d'un animal, ledit dispositif comprenant au moins une guêtre de protection ouverte et au moins une coque selon l'invention.

Enfin, la présente invention se rapporte également à une guêtre de protection d'au moins une partie d'un membre d'un animal, ladite guêtre étant fermée et intégrant une coque selon l'invention.

L'invention sera mieux comprise à l'aide de la description détaillée qui est exposée ci-dessous en regard du dessin annexé dans lequel :
La figure 1 est une vue en perspective côté externe d'un dispositif de protection selon le mode préféré de réalisation l'invention ;
La figure 2 est une vue en perspective côté interne du dispositif de protection représenté à la figure 1 ;
La figure 3 est une vue en perspective du dispositif représenté à la figure 1 une fois fixé autour d'un membre d'un cheval ;
La figure 4 est une vue similaire à la figure 3 lorsque le pied du cheval est en mouvement.

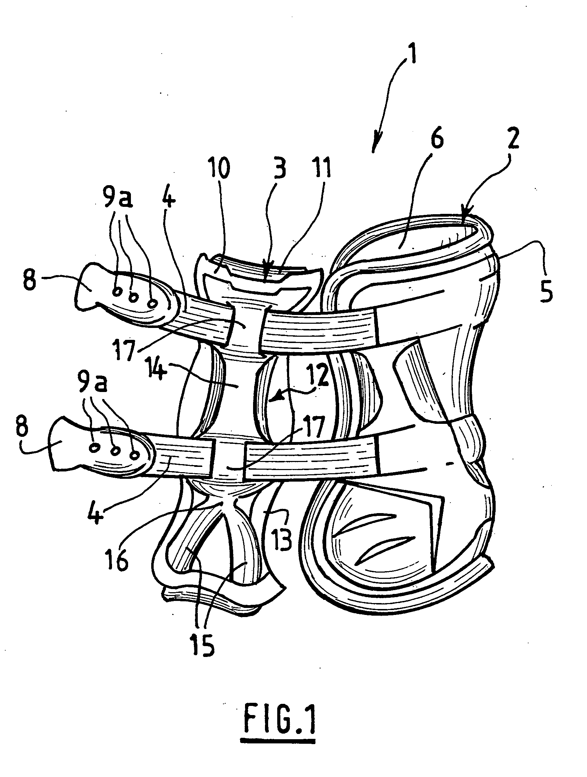

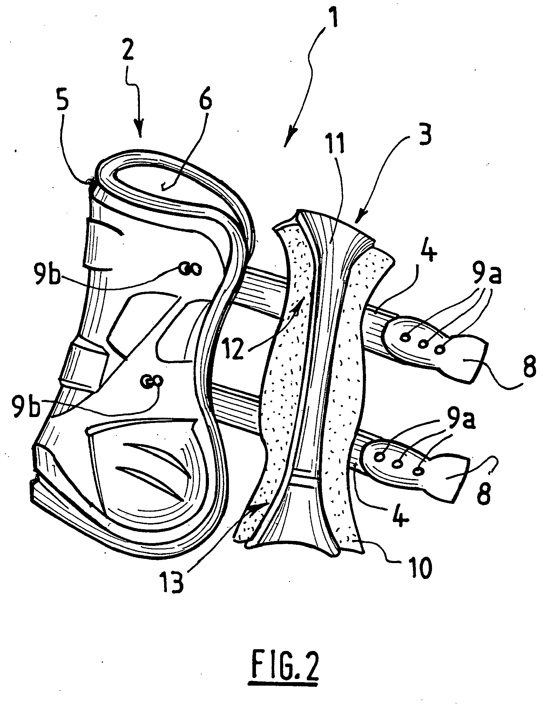

Un dispositif de protection 1 selon le mode préféré de réalisation de l'invention, tel que représenté aux figures 1 et 2, se décompose en une guêtre 2 de protection ouverte et une coque 3 de protection reliées l'une à l'autre au moyen de deux sangles 4.

Plus précisément, la guêtre 2 est une guêtre standard utilisée couramment dans la discipline du saut d'obstacle. Cette guêtre 2 comporte de façon classique, d'une part, une partie externe 5 réalisée par moulage dans un matériau thermoplastique rigide, et d'autre part, une partie interne 6 souple et amortissante.

Chacune des deux sangles 4 présente une première extrémité solidaire de la guêtre 2, et une seconde extrémité libre équipée d'un embout 8 portant trois perforations 9a alignées. La guêtre 2 comporte un jeu de pitons 9b prévu pour coopérer avec les perforations 9a afin de permettre la fixation de ladite guêtre 2 autour de l'arrière d'une partie d'un membre 18 à protéger d'un animal, par exemple un cheval.

La coque 3 possède une partie externe 10 rigide monobloc réalisée par moulage dans un matériau thermoplastique, et une partie interne 11 souple et amortissante.

Plus précisément, la partie externe 10 se décompose schématiquement en une partie supérieure 12 et en une partie inférieure 13 dans lesquelles sont respectivement ménagées une tige de protection 14 sensiblement longitudinale, et deux branches de protection 15 divergentes en forme de V inversé.

La partie supérieure 12 et la partie inférieure 13 sont reliées l'une à l'autre de façon continue par un pont 16 flexible formant une zone à rigidité amoindrie entre, d'une part, la tige de protection 14, et d'autre part, le point de jonction des deux branches de protection 15. Ce pont 16 est réalisé par une réduction de matière ou de l'épaisseur afin d'offrir une ligne de pliage (ou ligne de déformation) de la partie externe 10 sous l'effet d'un pliage du pied du cheval vers l'avant autour de son articulation.

Lors de l'opération de moulage, deux passants 17 sont ménagés dans la tige de protection 14 pour permettre le passage des sangles 4. En variante, il doit être bien compris que ces passants peuvent par exemple être prévus entre la partie externe 10 et la partie interne 11. La coque 3 est ainsi rattachée de façon amovible à la guêtre 2. Dans cet exemple de réalisation, les passants 17 et les sangles 4 constituent donc des moyens de liaison complémentaires. Le pont 16 s'étend juste dessous le passant 17 inférieur ; le passant 17 correspondant à une augmentation de l'épaisseur comparé au pont 16 qui lui correspond à une réduction d'épaisseur. La proximité du passant 17 épais et du pont 16 fin renforce la capacité de pliage ou de déformation au niveau exact du pont 16 sous l'effet d'un pliage de la jambe autour de l'articulation.

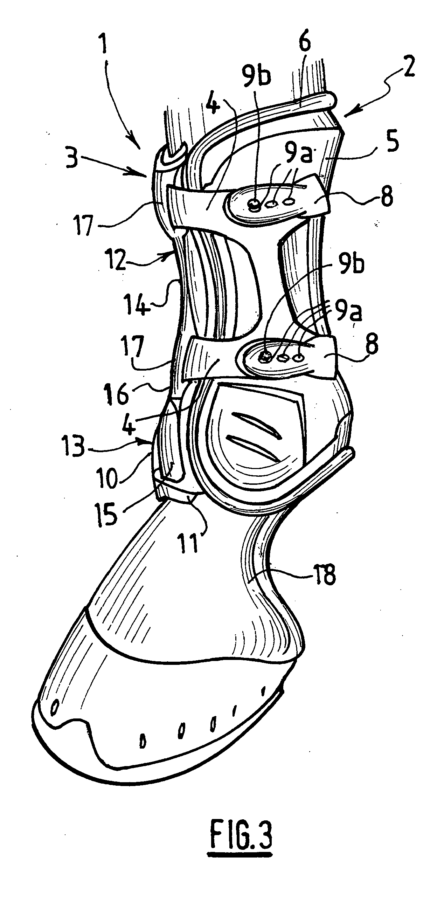

Comme représenté à la figure 3, une fois que le dispositif de protection 1 est monté autour de la partie basse du membre 18, la guêtre 2 et la coque 3 protègent respectivement la partie arrière et la partie avant dudit membre 18. Les sangles 4 sont tendues de manière à ce que le serrage soit efficace sans être trop prononcé, puis l'une des perforations 9a de chaque sangle 4 est rapportée sur le piton 9b correspondant. Ce faisant, la partie basse du membre 18, et notamment le boulet, est protégée contre les chocs frontaux.

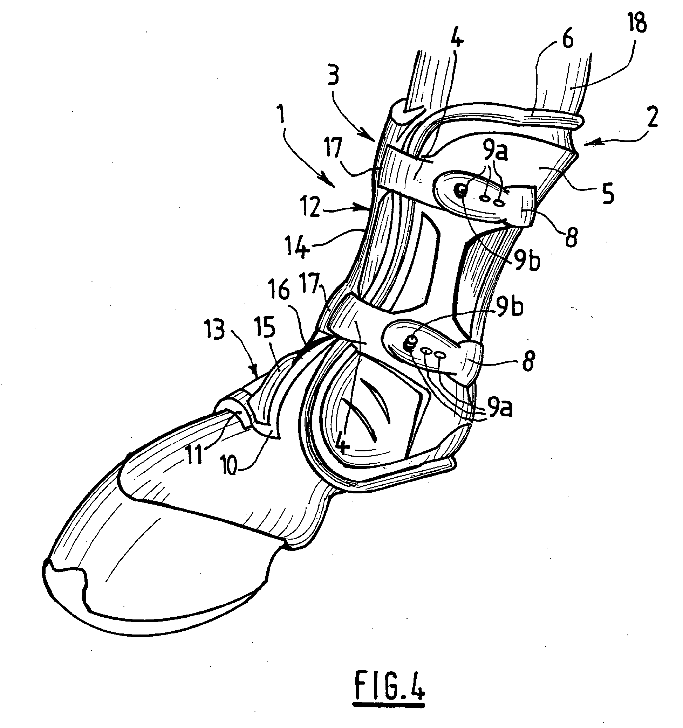

En mouvement, et comme illustré en figure 4, le pied du cheval bascule vers l'avant autour de son articulation, par exemple au moment de la réception après un saut, et la coque 3 se déforme en flexion autour du pont 16 de telle sorte que la partie inférieure 13 suit le mouvement naturel du membre 18. Le dimensionnement du pont 16 est adapté de façon à ce que ce dernier soit, d'une part, suffisamment résistant pour supporter les contraintes auquel il est soumis au fil du temps, et d'autre part, suffisamment souple pour que le pliage du pont 16 et la déformation de la partie inférieure 13 se produisent sans gêner l'animal.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Coque (3) de protection destinée à être positionnée en partie avant d'un membre (18) d'un animal afin de le protéger d'un choc frontal, ladite coque présentant une partie externe (10) rigide ou semi-rigide comprenant au moins une zone à rigidité amoindrie (16) permettant une déformation adaptée de ladite partie externe sous l'effet du mouvement naturel du membre de l'animal autour d'une articulation.

2. Coque (3) selon la revendication 1, **caractérisée en ce que** la partie externe (10) se décompose en au moins une partie supérieure (12) et une partie inférieure (13) séparées l'une de l'autre par au moins une zone à rigidité amoindrie (16).

3. Coque (3) selon la revendication 2, **caractérisée en ce que** la zone à rigidité amoindrie est conçue de manière à constituer au moins un pont (16) flexible entre la partie supérieure (12) et la partie inférieure (13).

4. Coque (3) selon l'une quelconque des revendications 2 ou 3, **caractérisée en ce qu'**au moins une tige de protection (14) sensiblement longitudinale est ménagée dans la partie supérieure (12).

5. Coque (3) selon l'une quelconque des revendications 2 à 4, **caractérisée en ce qu'**au moins deux branches de protection (15) divergentes sont ménagées dans la partie inférieure (13).

6. Coque (3) selon les revendications 4 et 5, **caractérisée en ce que** la zone à rigidité amoindrie (16) constitue l'interface entre la tige de protection (14) et les deux branches de protection (15).

7. Coque (3) selon l'une quelconque des revendications 1 à 6, **caractérisée en ce qu'**elle comprend des moyens de liaison (17) conçus pour coopérer avec des moyens de liaison (4) correspondants présentés par une guêtre (2) de protection ouverte.

8. Coque (3) selon la revendication 7, **caractérisée en ce que** les moyens de liaison comprennent au moins un passant (17) pour sangle (4).

9. Dispositif de protection (1) d'au moins une partie d'un membre (18) d'un animal, ledit dispositif comprenant au moins une guêtre de protection (2) ouverte et au moins une coque (3) selon l'une quelconque des revendications 7 ou 8.

10. Guêtre de protection d'au moins une partie d'un membre (18) d'un animal, ladite guêtre étant fermée et intégrant une coque (3) selon l'une quelconque des revendications 1 à 6.

## Claims

1. A protective shell (3) intended to be positioned at the front of a limb (18) of an animal so as to protect it from frontal impact, said shell having a rigid or semi-rigid external part (10) comprising at least one area of reduced rigidity (16) allowing for adapted deformation of said external part under the effect of the natural movement of the animal's limb around a joint.

2. The shell (3) according to claim 1, **characterized in that** the external part (10) is composed of at least one upper part (12) and one lower part (13) separated from each other by at least one area of reduced rigidity (16).

3. The shell (3) according to claim 2, **characterized in that** the area of reduced rigidity is designed so as to form at least one flexible bridge (16) between the upper part (12) and the lower part (13).

4. The shell (3) according to any of claims 2 or 3, **characterized in that** at least one substantially longitudinal protective rod (14) is arranged inside the upper part (12).

5. The shell (3) according to any of claims 2 to 4, **characterized in that** at least two diverging protective branches (15) are arranged inside the lower part (13).

6. The shell (3) according to claims 4 and 5, **characterized in that** the area of reduced rigidity (16) forms the interface between the protective rod (14) and the two protective branches (15).

7. The shell (3) according to any of claims 1 to 6, **characterized in that** it comprises connecting means (17) designed to cooperate with corresponding connecting means (4) provided by an open protective boot (2).

8. The shell (3) according to claim 7, **characterized in that** the connecting means comprise at least one loop (17) for a strap (4).

9. A device (1) for protecting at least part of an animal's limb (18), said device comprising at least one open protective boot (2) and at least one shell (3) according to any of claims 7 or 8.

10. A boot for protecting at least part of an animal's limb (18), said boot being closed and integrating a shell (3) according to any of claims 1 to 6.

## Patentansprüche

1. Schutzschale (3), die dazu gedacht ist, vorne an einer Gliedmaße (18) eines Tiers positioniert zu werden, um diese vor einem Frontalaufprall zu schützen, wobei die Schale einen steifen oder halbsteifen externen Teil (10) aufweist, der mindestens einen Bereich verringerter Steifigkeit (16) umfasst, der eine geeignete Verformung des externen Teils unter der Einwirkung der natürlichen Bewegung der Gliedmaße des Tiers um ein Gelenk ermöglicht.

2. Schale (3) nach Anspruch 1, **dadurch gekennzeichnet, dass** der externe Teil (10) aus mindestens einem oberen Teil (12) und aus einem unteren Teil (13) besteht, die voneinander durch mindestens einen Bereich verringerter Steifigkeit (16) getrennt sind.

3. Schale (3) nach Anspruch 2, **dadurch gekennzeichnet, dass** der Bereich verringerter Steifigkeit derart ausgelegt ist, dass er mindestens einen biegsamen Übergang (16) zwischen dem oberen Teil (12) und dem unteren Teil (13) bildet.

4. Schale (3) nach einem der Ansprüche 2 oder 3, **dadurch gekennzeichnet, dass** mindestens ein im Wesentlichen länglicher Schutzstab (14) in dem oberen Teil (12) eingerichtet ist.

5. Schale (3) nach einem der Ansprüche 2 bis 4, **dadurch gekennzeichnet, dass** mindestens zwei abweichende Schutzzweige (15) in dem unteren Teil (13) eingerichtet sind.

6. Schale (3) nach Anspruch 4 und 5, **dadurch gekennzeichnet, dass** der Bereich verringerter Steifigkeit (16) die Schnittstelle zwischen dem Schutzstab (14) und den beiden Schutzzweigen (15) bildet.

7. Schale (3) nach einem der Ansprüche 1 bis 6, **dadurch gekennzeichnet, dass** sie Verbindungsmittel (17) umfasst, die dazu gedacht sind, mit entsprechenden Verbindungsmitteln (4) zusammenzuwirken, die von einer offenen Gamasche (2) bereitgestellt werden.

8. Schale (3) nach Anspruch 7, **dadurch gekennzeichnet, dass** die Verbindungsmittel mindestens eine Schlaufe (17) für einen Riemen (4) umfassen.

9. Vorrichtung (1) zum Schutz mindestens eines Teils einer Gliedmaße (18) eines Tiers, wobei die Vorrichtung mindestens eine offene Schutzgamasche (2) und mindestens eine Schale (3) nach einem der Ansprüche 7 oder 8 umfasst.

10. Gamasche zum Schutz mindestens eines Teils einer Gliedmaße (18) eines Tiers, wobei die Gamasche geschlossen ist und eine Schale (3) nach einem der Ansprüche 1 bis 6 integriert.
